**Europäisches Patentamt**

**European Patent Office**

**Office européen des brevets**

(19)

(11) Veröffentlichungsnummer: **0 296 593**
**B1**

(12) **EUROPÄISCHE PATENTSCHRIFT**

(45) Veröffentlichungstag der Patentschrift:
**12.12.90**

(51) Int. Cl.⁵: **G01M 1/36**

(21) Anmeldenummer: **88110038.2**

(22) Anmeldetag: **23.06.88**

(54) **Auswuchtvorrichtung für von einer umlaufenden Welle getragene Gegenstände.**

(30) Priorität: **23.06.87 DE 3720746**

(43) Veröffentlichungstag der Anmeldung:
**28.12.88 Patentblatt 88/52**

(45) Bekanntmachung des Hinweises auf die Patenterteilung:
**12.12.90 Patentblatt 90/50**

(84) Benannte Vertragsstaaten:
**AT CH DE ES FR GB IT LI NL SE**

(56) Entgegenhaltungen:
**EP-A- 0 021 037**
**DE-A- 2 830 070**
**DE-B- 2 345 664**
**DE-C- 2 148 832**

(73) Patentinhaber: **Walter Dittel GmbH Luftfahrtgerätebau,
Erpftinger Strasse 36, D-8910 Landsberg/Lech 1(DE)**

(72) Erfinder: **Otto, Franz, Herzogstandstrasse 16,
D-8910 Landsberg(DE)**
Erfinder: **Lotze, Walter, Von-den-Hoffstrasse 1,
D-8910 Landsberg(DE)**

(74) Vertreter: **Manitz, Gerhart, Dipl.-Phys. Dr. et al, MANITZ,
FINSTERWALD & ROTERMUND Robert-Koch-Strasse 1,
D-8000 München 22(DE)**

## Beschreibung

Die Erfindung betrifft eine Auswuchtvorrichtung für von einer umlaufenden Welle getragene Gegenstände, z.B. Schleifscheiben, nach dem Oberbegriff des Patentanspruchs 1.

Derartige Auswuchtvorrichtungen werden z. B. zur Auswuchtung von auf einer rotierenden Welle angeordneten Schleifscheiben verwendet, in dem beispielsweise durch einen Unwuchtaufnehmer festgestellte Unwuchten in ein elektrisches Signal umgewandelt werden, welches die beiden Auswuchtmassen so lange in Umfangsrichtung relativ zur umlaufenden Welle und zueinander erstellt, bis eine etwa festgestellte Unwucht ausgeglichen ist. Bei einer bekannten Vorrichtung zum Auswuchten von umlaufenden Körpern (DE-PS 21 48 832) sind in der Spindel bzw. Welle zwei unabhängig voneinander schaltbare elektrische Stellmotoren für die Verstellung der Auswuchtmassen angeordnet, wobei die beiden Auswuchtmassen im Bereich des auszuwuchtenden Gegenstandes in Achsrichtung gesehen hintereinander angeordnet sind und die ihnen zugeordneten Stellmotoren jeweils halbkreissegmentartig umschließen. Die Zuführung des Stromes für die Stellmotoren zwecks Antriebs in der einen oder anderen Drehrichtung erfolgt durch an der Stirnseite der Welle angeordnete Schleifringe, auf die ein Bürstenhalter mit vier elektrischen Stromzuführungsbürsten aufgesetzt ist, wodurch die gesteuerte Zufuhr des Antriebsstromes für beide Elektromotoren in den entgegengesetzten Drehrichtungen gewährleistet ist.

Da eine derartige Unwuchtbeseitigung insbesondere bei umlaufenden Schleifscheiben wegen ständiger Unwuchtänderung im Dauerbetrieb, zumindest aber in relativ kurzen zeitlichen Abständen durchgeführt werden muß, muß auch der Bürstenkopf ständig auf der umlaufenden Welle aufgesetzt sein, so daß es zum einen zu Abnützungserscheinungen an den Schleifringen und dem Bürstenkopf kommt und zum anderen die Gefahr einer unzureichenden Kontaktgabe besteht.

Die stillstehenden Bürstenträger werden im allgemeinen auch noch mit Dichtungen gegen den rotierenden Teil abgedichtet. Das hierfür verwendete Material ist jedoch auf längere Sicht gegen aggressive Zusätze bei Kühlmitteln zwecks Verbesserung der Schleifqualität nicht ausreichend resistent. Das heißt die Dichtungen werden nach kurzer Zeit unbrauchbar, und das zwischen den Bürstenkopf und die umlaufende Welle eindringende Kühlwasser zerstört den elektrischen Verstellmechanismus. Selbst bei nicht vorhandenen aggressiven Zusätzen im Kühlwasser müssen die Dichtungen und Schleifringe sowie Bürsten in regelmäßigen Abständen ausgewechselt werden, da aufgrund der Reibung ein ständiger Verschleiß vorliegt.

Die Aufgabe der Erfindung besteht darin, eine Auswuchtvorrichtung der eingangs genannten Gattung zu schaffen, mit der eine berührungsfreie und damit auch verschleißfreie Energie- und Steuersignalübertragung von der Energiezufuhr- und Steuervorrichtung auf die in der umlaufenden Welle angebrachten elektrischen Bauelemente auf einfache Weise gewährleistet wird.

Zur Lösung dieser Aufgabe sind die Merkmale des kennzeichneten Teils des Patentanspruchs 1 vorgesehen.

Die Induktionsspulenanordnungen sind dabei zweckmäßig durch zentrisch zueinander und zur umlaufenden Welle angeordnete, bewickelte Schalenkerne verwirklicht, die mit ihrer offenen Seite gegeneinander weisen und so einen Transformator mit einem Luftspalt dazwischen bilden. Durch geeignete Auslegung und unter Ausnutzung relativ hoher Frequenzen kann hiermit auch bei Verwendung sehr kleiner Kerne ausreichend Energie übertragen werden. Erfindungsgemäß wird die Primär-Induktionsspulenanordnung (d. h. der ortsfest montierte Sendeschalenkern) mit so viel verschiedenen Frequenzen betrieben, wie Signalzustände über die rotierende Sekundär-Induktionsspulenanordnung (Empfängersschalenkern) in der nachgeschalteten Auswuchtelektronik gebraucht werden.

Damit wird über die gleiche gemeinsame Übertragungsstrecke in gewünschter verschleiß- und berührungsfreier Weise sowohl für die elektrischen Stellmotoren benötigte elektrische Energie als auch die für die Auswerte- und Steuerelektronik erforderlichen Signalzustände übertragen. Dadurch, daß man den die Sekundär-Induktionsspulenanordnung bildenden Empfangsschalenkern abdecken oder vergießen kann, ist es möglich, einen hermetisch dichten Auswuchtkopf zu bauen, der von den bekannten Kühlmittelzusätzen nicht angegriffen wird. Falls beim Schleifen die Primär-Induktionsspulenanordnung bzw. der Sendeschalenkern mit seinem Träger im Weg steht, kann er nach erfolgtem Auswuchtvorgang erfindungsgemäß weggeklappt werden bzw. in einer Arbeitspause der Maschine wieder zum kurzzeitigen Nachwuchten in seine Arbeitsstellung zurückgeklappt werden.

Aufgrund der Ausbildung nach Anspruch 2 kann die Auswuchtung wahlweise von Hand oder automatisch durchgeführt werden.

Anspruch 3 beschreibt eine besonders zweckmäßige Ansteuerung der Regelstufe, die den Oszillator auf die erforderlichen unterschiedlichen Frequenzen ansteuert.

Erfindungsgemäß ist der Impulsmodulator nach Anspruch 4 ebenfalls von der Regelstufe angesteuert, wobei die Impulsmodulation einem Ein- Ausschaltvorgang entspricht.

Durch längere oder kürzere Einschaltimpulse kann so die gewünschte Drehzahl des gerade angesteuerten Stellmotors erzielt werden.

Für eine möglichst verlustfreie Energieübertragung von der Primär- auf die Sekundär-Induktionsspulenanordnung ist es zweckmäßig, wenn diese beiden Spulenanordnungen gemäß Anspruch 5 als Resonanztransformator ausgebildet sind.

Zweckmäßig ist der Frequenzhub gemäß dem Anspruch 7 relativ gering. Der Transformator kann so bei allen Arbeitsfrequenzen praktisch in Resonanz arbeiten. Gleichwohl ist die Frequenztrennung in der Frequenzbewertungsschaltung möglich.

Ein besonders zweckmäßiger Frequenzbereich ist durch Anspruch 8 definiert.

Die Energie für die Motorsteuerung wird zweckmäßig durch die Schaltung nach Anspruch 9 übertragen.

Um dem Benutzer jeweils den Winkelstand der Auswuchtmassen anschaulich anzuzeigen, ist die Ausführungsform nach Anspruch 10 vorgesehen. Eine besonders kompakte und auch einfach zu beschaltende Anordnung wird durch Anspruch 11 definiert. Man kommt mit einem einzigen Leuchtdiodenring aufgrund der Ausbildung nach Anspruch 12 aus. Für jede Auswuchtmasse ist also ein mit unterschiedlicher Farbe leuchtender Leuchtdiodenring vorgesehen, wobei stets diejenige Leuchtdiode aufleuchtet, mit der die zugeordnete Auswuchtmasse gerade in Ausrichtung steht.

Um beim Montieren der Energiezufuhr- und Steuervorrichtung problemlos den optimalen Abstand zu finden, sind die Ausführungsformen nach den Ansprüchen 13 und 14 vorgesehen.

Sofern mehrere rotierende Gegenstände z. B. Schleifscheiben auszuwuchten sind, kann auch eine abnehmbare Energiezufuhr- und Steuervorrichtung für verschiedene Wellen verwendet werden, von denen allerdings jede mit einer Sekundär-Induktionsspulenanordnung und der daran angeschlossenen Elektronik mit Auswuchtmassen ausgestattet sein muß.

Sofern die erfindungsgemäße Sekundär-Induktionsspulenanordnung nicht zentrisch an der Stirnseite einer beispielsweise fliegend gelagerten Welle angeordnet werden kann, kann man sie auch auf einem umlaufenden konzentrischen Ringbereich um die Welle herum anordnen. Da jedoch die Sekundär-Induktionsspulenanordnung dann bei jedem Umlauf der Welle nur einmal kurzzeitig an der gegenüber dem Ringbereich angeordneten Primär-Induktionsspulenanordnung vorbeiläuft, ist die vorteilhafte Weiterbildung nach Anspruch 16 vorgesehen.

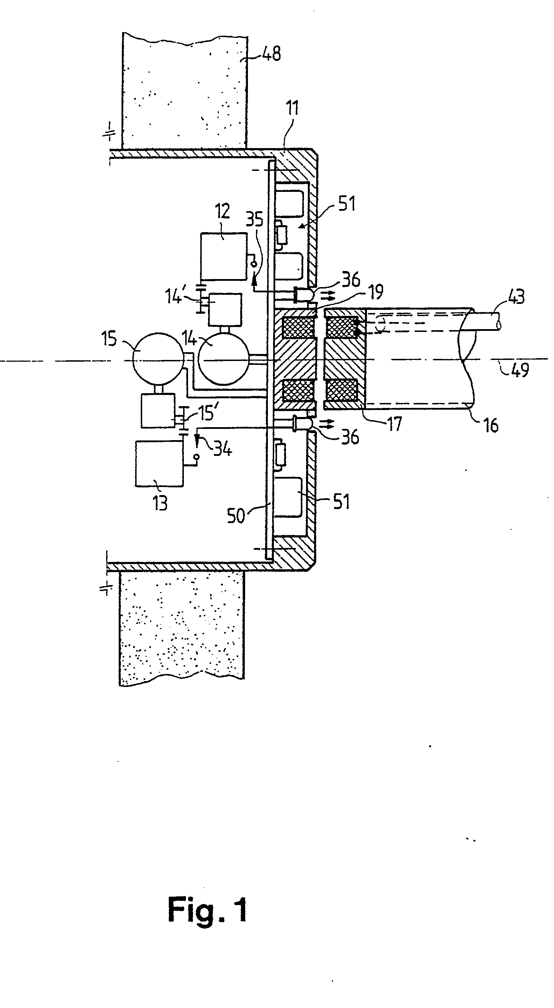

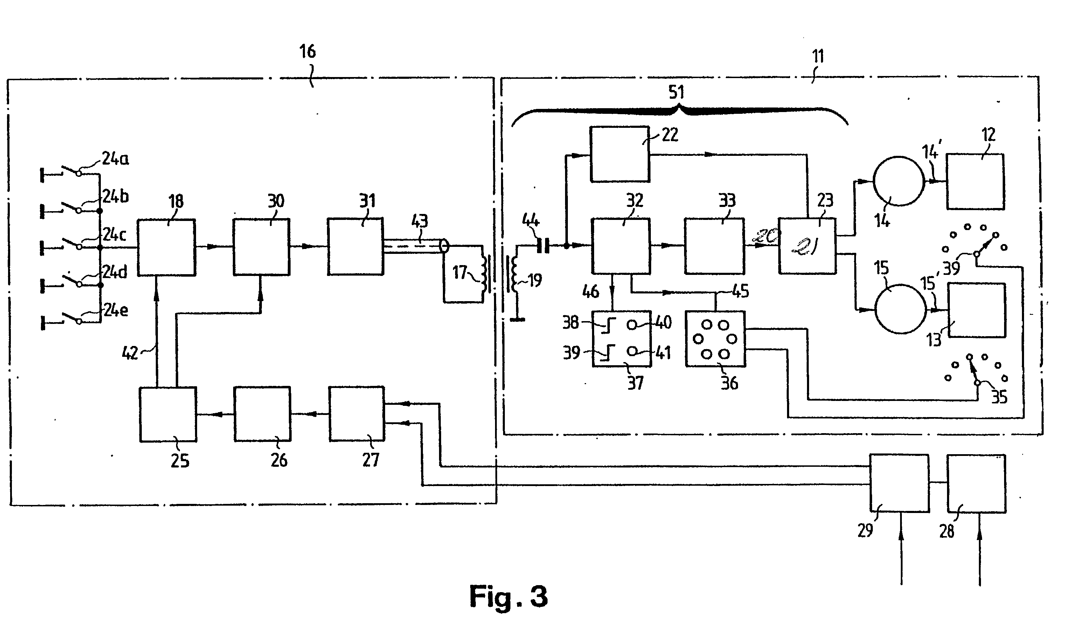

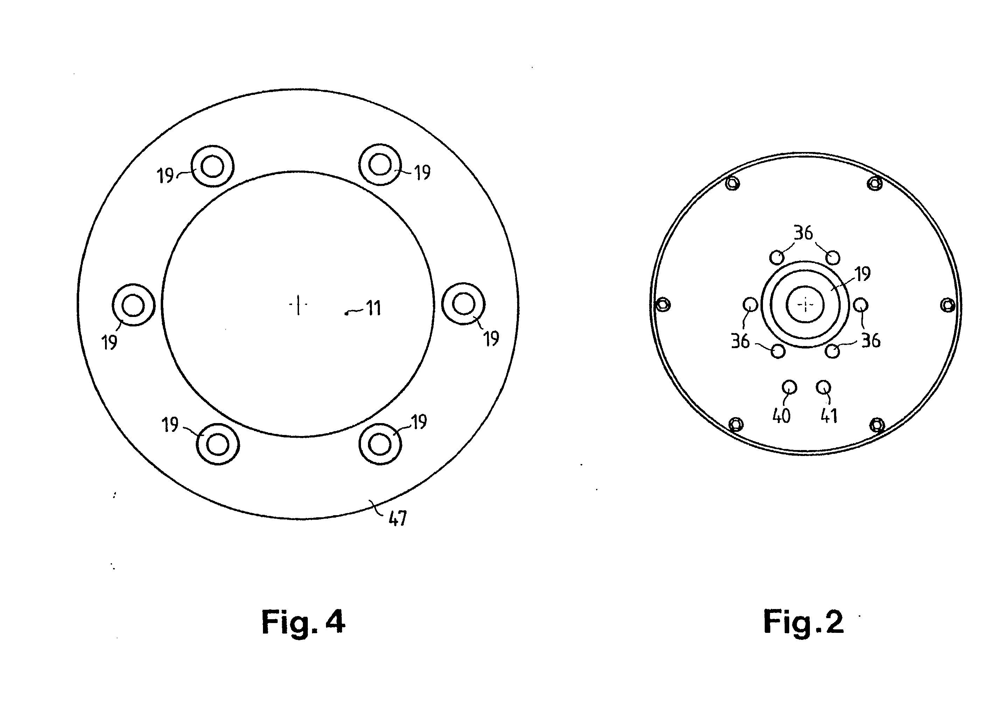

Die Erfindung wird im folgenden beispielsweise anhand der Zeichnung beschrieben; in dieser zeigt Figur 1 eine teilweise geschnittene Seitenansicht einer erfindungsgemäßen Auswuchtvorrichtung an einer eine Schleifscheibe tragenden Welle, Figur 2 eine Stirnansicht der Welle nach Figur 1, Figur 3 ein Blockschaltbild der Auswuchtvorrichtung nach den Figuren 1 und 2 Figur 4 eine schematische Stirnansicht eines um eine Welle 11 herum angeordneten Ringbereiches mit mehreren Sekundär-Inkuktionsspulenanordnungen.

Nach Figur 1 ist eine Schleifscheibe 48, die nur teilweise dargestellt, auf einer hohlen Welle 11 angeordnet, die um ihre Mittelachse 49 zu einer schnellen Drehbewegung antreibbar ist.

Innerhalb der Welle sind relatv zu dieser fest zwei elektrische Stellmotoren 14 bzw. 15 axial hintereinander angeordnet, deren Wellen über Getriebe 14', 15' Auswuchtmassen 12 bzw. 13 bewegen, antreiben, o.ä.

Die Drehwellen der Stellmotoren 14, 15 liegen annähernd konzentrisch zur Mittelachse 49, während die Auswuchtmassen 12, 13 exzentrisch angeordnet sind. Je nach der Drehstellung der Drehwellen der Stellmotoren 14, 15 nehmen die Auswuchtmassen 12, 13 untershiedliche Winkelstellungen relativ zur Welle 11 an. Sowohl die Stellmotoren 14, 15 als auch die Auswuchtmassen 12, 13 laufen zusammen mit der Welle 11 um die Mittelachse 49.

In der Stirnseite der Welle 11 ist nach Figur 1 eine Primär-Induktionsspulenanordnung 19 in Form eines mit einer Spule bewickelten Schalenkerns vorgesehen, welche über eine auf einer Schaltplatine 50 vorgesehene Elektronik 51 die elektrischen Stellmotoren 14, 15 in der weiter unten anhand von Figur 3 beschriebenen Weise elektrisch ansteuert.

Außerdem ist in der Stirnseite der Welle 11 noch ein Leuchtdiodenring 36 (Figur 2) konzentrisch angeordnet, dessen einzelne Leuchtdioden in zwei verschiedenen Farben leuchten können und ebenfalls von der Elektronik 51 in der weiter unter beschriebenen Weise angesteuert werden.

Zur Sekundär-Induktionsspulenanordnung 19 ist mit geringem Abstand vor dieser feststehend eine Primär-Induktionsspulenanordung 17 ebenfalls in Form eines mit einer Spule bewickelten Schalenkernes angeordnet, welche einen Bestandteil einer Energiezufuhr 16 bildet, die in Figur 1 nur gestrichelt angedeutet ist.

Nach Figur 3 besitzt die Energiezufuhr- und Steuervorrichtung 16 fünf handbetätigte Schalter 24a, 24b, 24c, 24d und 24e, die an einen Oszillator 18 angeschlossen sind, der ein Frequenzsignal erzeugt. Je-nachdem, welcher der Schalter 24a - 24e geschlossen ist, erzeugt der Oszillator 18 jeweils eine individuelle, nur diesem Schalter zugeordnete Frequenz.

Wird beispielsweise der Schalter 24a geschlossen, so wird eine Frequenz von 90 kHz erzeugt. Durch schließen des Schalters 24b wird eine Frequenz von 95 kHz erzielt usw. bis vom Schalter 24e beim Schließen eine Frequenz von 110 kHz am Oszillator 18 hervorgerufen wird.

Die Schalter 24a - 24e sind zweckmäßigerweise als Taster ausgebildet, so daß zu einem Zeitpunkt jeweils nur einer der Schalter geschlossen ist.

Dem Oszillator wird außerdem durch eine Steuerleitung 42 von einer Regelstufe 25 ein weiteres Steuersignal alternativ zugeführt, welches die vom Oszillator 18 erzeugte Frequenz alternativ in gleicher Weise verändern kann wie die Handschalter 24a - 24e. Hierzu ist die Regelstufe über eine Unwuchtanzeigestufe 26 und einen Messverstärker 27 an einen Drehzahlaufnehmer 29 sowie einen Beschleunigungsaufnehmer 28 angeschlossen, die im Bereich der Welle 11 so angeordnet sind, daß sie ein der Drehzahl der Welle 11 und den Unwuchtschwingungen entsprechendes Steuersignal an den Messverstärker 27 liefern. Durch den Drehzahlaufnehmer 29 wird also ein Drehzahlsignal von der Welle 11 bzw. der Schliefspindel und durch den Beschleunigungsaufnehmer ein für die Vibrationen der Welle bzw. der Schleifspindel repräsentatives Signal zugeführt.

Die Regelstufe 25 steuert außerdem den Steuereingang eines Impulsmodulators 30 an, dem das Ausgangssignal des Oszillators 18 zugeführt wird. Die Regelstufe 25 steuert den Impulsmodulator 30 so, daß das Signal vom Oszillator 18 ständig ein- und ausgeschaltet wird, wobei die Dauer der Einschaltperioden von der Regelstufe 25 entsprechend dem Regeleingang gesteuert wird.

An den Impulsmodulator 30 ist eine Leistungsendstufe 31 angeschlossen, die über ein Koaxialkabel 43 die Primär-Induktionsspulenanordnung 17 mit Hochfrequenzenergie speist.

Die im geringen Abstand an der Welle 11 angeordnete Sekundär-Induktionsspulenanordnung 19 ist über einen Kondensator 44 parallel an eine Gleichrichterschaltung 32 mit Speicher und an eine Frequenzbewertungsschaltung 22 angelegt. Die Gleichrichterschaltung 32 speist über eine Umrichterschaltstufe 33 den Energiezufuhreingang 20 einer Motorsteuerschaltung 21, die die beiden elektrischen Stellmotoren 14 bzw. 15 mit Energie versorgt, damit die Auswuchtmassen 12 bzw. 13 in die richtige Winkellage gebracht werden können.

Die Frequenzbewertungsschaltung 22 speist den Steuereingang 23 der Motorsteuerschaltung 21.

Jeder Drehrichtung jedes der beiden Stellmotoren 14, 15 ist eine der vier mit den Handschaltern 24a - 24d einschaltbaren Frequenzen zugeordnet, wobei diese vier Frequenzen auch durch die Regelstufe im Oszillator 18 erzeugt werden können. Die Frequenzbewertungsschaltung 22 stellt dann fest, welche der vier Steuerfrequenzen vom Oszillator 18 geliefert wird und veranlasst die Motorsteuerschaltung 21 ein Rechts- oder Linksdrehsignal an den entsprechenden elektrischen Stellmotor 14 bzw. 15 abzugeben.

Die für das Betreiben der Stellmotoren 14, 15 erforderliche Energie wird über die Gleichrichterschaltung 32 sowie die Umrichterschaltstufe, 33 und die Motorsteuerung 21 an die Motoren 14 bzw. 15 geliefert.

Auf diese Weise können die Auswuchtmassen 12 bzw. 13 winkelmäßig so relativ zur Welle 11 und zueinander eingestellt werden, daß eine Auswuchtung der Welle 11 erfolgt.

Sobald die Auswuchtung erfolgt ist, sind alle Schalter 24a - 24d geöffnet, so daß keiner der beiden Stellmotoren 14 bzw. 15 ein Stellsignal erhält.

Nach den Figuren 1 und 3 sind jedem Stellmotor 14, 15 bzw. jeder Auswuchtmasse 12, 13 Codierschalter 34, 35 zugeordnet, welche eine der Winkelstellung der zugeordneten Auswuchtmasse 12 bzw. 13 entsprechende Winkellage einnehmen und mit der durch den Leuchtdiodenring gebildeten Positionsanzeigevorrichtung 36 elektrisch verbunden sind. Die Positionsanzeigevorrichtung 36 wird von der Gleichrichterschaltung 32 mit elektrischer Energie über eine Leitung 45 versorgt.

Die Codierschalter 34 bzw. 35 bringen jeweils diejenige der auf dem Leuchtdiodenring angeordnete Leuchtdiode zum Aufleuchten, die dem Richtungsvektor der zugeordneten Auswuchtmasse 12 bzw. 13 entspricht. Da jede der Leuchtdioden in zwei Farben aufleuchten kann, kann die eine Farbe für die Auswuchtmasse 12, die andere Farbe für die Auswuchtmasse 13 reserviert werden.

Der Benutzer, der die Stirnseite der Welle 11 so wie in Figur 2 dargestellt sieht, hat somit stets ein optisches Bild über die Stellung der Auswuchtmassen 12, 13 vor Augen.

Außerdem speist die Gleichrichterschaltung 32 über eine Leitung 46 eine Distanzanzeigevorrichtung 37 mit elektrischer Energie. In die Distanzanzeigevorrichtung 37 sind zwei elektronische Schwellen 38 bzw. 39 eingebaut, die Leuchtdioden 40 bzw. 41 ansteuern. Die Schwelle 38 wird überschritten, wenn die Primär-Induktionsspulenanordnung 17 den Mindestabstand zur Sekundär-Induktionsspulenanordnung 19 erreicht hat. Wird die Annäherung der beiden Spulenanordnungen zu groß, so wird auch die zweite Schwelle 39 überschritten, und auch die Leuchtdiode 41 leuchtet auf. In diesem Fall ist jedoch schon eine mechanische Berührung der Primär-Induktionsspulenanordnung 17 und der Stirnseite der Welle 11 zu befürchten. Die optimale Distanz ist somit dann eingestellt, wenn die Leuchtdiode 40 aufleuchtet, die Leuchtdiode 41 jedoch nicht.

Falls es nicht möglich ist, die Sekundär-Induktionsspulenanordnung 19 konzentrisch an der Stirnseite der umlaufenden Welle 11 anzuordnen, kann man auch mehrere Sekundär-Induktionsspulenanordnung 19 gemäß Figur 4 entlang eines zur Welle 11 konzentrischen und mitumlaufenden Ringbereiches 19 anordnen, welche sämtlich mit einer einzigen Primär-Induktionsspulenanordnung 17, die gegenüber dem Ringbereich 47 in nicht dargestellter Weise angeordnet ist, zusammenwirken. Sämtliche Sekundär-Induktionsspulenanordnungen 19 nach Figur 4 sind parallel an die Elektronik 51 nach Figur 3 angeschlossen, so daß in kurzen zeitlichen Abständen eine Energie- und Steuersignalübertragung analog dem Ausführungsbeispiel nach den Figuren 1 - 3 erfolgt.

Der Kondensator 44 kompensiert die durch den Abstand der beiden Induktionsspulenanordnungen 17, 19 verursachte Streuinduktivität des Transformators.

Der fünfte Handschalter 24e wird geschlossen, wenn keine Auswuchtung erforderlich ist, um auf diese Weise die Anzeigevorrichtungen 36, 37 mit Energie zu versorgen. Die durch Schließen des Handschalters 24e vom Oszillator 18 erzeugte Frequenz wird von der Frequenzbewertungsschaltung 22 nicht berücksichtigt, führt also zu keiner Betätigung der Stellmotoren 14 bzw. 15.

In die Gleichrichterschaltung 32 kann ein Speicher, beispielsweise ein Akkumulator eingebaut werden, der während der Auswuchtpausen von der gleichen elektrischen Energie aufgeladen wird, die auch die Anzeigevorrichtungen 36, 37 speist.

Wie gesagt, wird der Start-Stop-Befehl für die beiden elektrischen Stellmotoren 14, 15 durch Ein- und Ausschalten der Endleistungsstufe 31 herbeigeführt. Die Drehrichtung der beiden Motoren wird mit den vier verschiedenen Sendefrequenzen bestimmt. Die Drehzahl der Motoren wird durch die entsprechend eingestellte Impulsmodulation des Impulsmodulators 30 gesteuert.

## Patentansprüche

1. Auswuchtvorrichtung für von einer umlaufenden Welle (11) getragene Gegenstände, z. B. Schleifscheiben (48), bei der innerhalb oder außerhalb der Welle zwei elektromagnetisch verdrehbare Auswuchtmassen (12, 13) exzentrisch angeordnet sind, welche durch zwei elektrische Stellmotoren (14, 15) von einer ruhenden Energiezufuhr- und Steuervorrichtung (16) in Drehstellungen gebracht werden, wo sie eine etwaige Unwucht des Gegenstandes ausgleichen, dadurch **gekennzeichnet,** daß die Energiezufuhr- und Steuervorrichtung (16) eine ruhend nahe der Welle (11) angeordnete Primär-Induktionsspulenanordnung (17) aufweist, die mit einer für den Antrieb der Stellmotoren (14, 15) ausreichenden Hochfrequenzleistung gespeist ist, welche von einem auf wenigstens vier verschiedene Frequenzen einstellbaren Oszillator (18) abgeleitet ist, wobei die erste Frequenz dem Drehantrieb des ersten Stellmotors (14) in einer Richtung, die zweite Frequenz dem Drehantrieb des zweiten Stellmotors (15) in einer Richtung und die beiden weiteren Frequenzen den entgegengesetzten Drehrichtungen der beiden Stellmotoren (14 bzw. 15) zugeordnet sind, daß wahlweise beide Stellmotoren einzeln oder gleichzeitig betrieben werden, daß in oder an der Welle (11) nahe der Primär-Induktionsspulenanordnung (17) wenigstens eine Sekundär-Induktionsspulenanordnung (19) in induktiver Kopplung zur Primär-Induktionsspulenanordnung (17) befestigt ist, wobei das Ausgangssignal der Sekundär-Induktionsspulenanordnung an den Energiezufuhreingang (20) einer die Stellmotoren (14,15) mit Energie versorgenden Motorsteuerschaltung (21) und über eine Frequenzbewertungsschaltung (22) auch an den Steuereingang (23) der Motorsteuerschaltung (21) angeschlossen ist, und daß die Frequenzbewertungsschaltung (22) an die Motorsteuerschaltung (21) Steuersignale liefert, die die Motorsteuerschaltung (21) veranlassen, die Stellmotoren (14,15) zwecks Auswuchtung entsprechend der erwähnten Frequenz- Drehantriebszuordnung anzutreiben.

2. Vorrichtung nach Anspruch 1,dadurch **gekennzeichnet,** daß der Oszillator (18) wahlweise durch handgesteuerte Frequenzschalter (24a, 24b, 24c, 24d, 24e) oder durch ein automatisches Regelsignal auf die für die Auswuchtung erforderliche Frequenz eingestellt wird, wobei insbesondere an den Oszillator (18) eine Regelstufe (25) angeschlossen ist, die vorzugsweise über eine Unwuchtanzeigestufe (26) und einen Meßverstärker (27) von einem Unwuchtaufnehmer (28) und vorzugsweise auch noch von einem Drehzahlaufnehmer (29) angesteuert ist.

3. Vorrichtung nach einem der vorhergehenden Ansprüche, dadurch **gekennzeichnet,** daß der Oszillator (18) über einen Impulsmodulator (30) an eine Leistungsendstufe (31) angeschlossen ist, die die Primär-Induktionsspulenanordnung (17) speist, und/oder daß die Primär-Induktionsspulenanordnung (17) und die Sekundär-Induktionsspulenanordnung (19) einen Resonanztransformator bilden.

4. Vorrichtung nach einem der vorhergehenden Ansprüche, dadurch **gekennzeichnet,** daß der Frequenzhub des Oszillators (18) einen Bruchteil der Grund- bzw. mittleren Frequenz beträgt, wobei vorzugsweise der Frequenzhub etwa 20 % der Grund- oder mittleren Frequenz beträgt.

5. Vorrichtung nach einem der vorhergehenden Ansprüche, dadurch **gekennzeichnet,** daß die Grund- oder mittlere Frequenz zwischen 50 und 150 kHz und insbesondere bei 100 kHz leigt und/oder daß am Ausgang der Sekundär-Induktionsspulenanordnung (19) eine Gleichrichterschaltung (32) mit Speicher anliegt, die vorzugsweise über eine Umrichterschaltstufe (33) mit dem Energiezufuhreingang (20) der Motorsteuerschaltung (21) verbunden ist.

6. Vorrichtung nach einem der vorhergehenden Ansprüche, dadurch **gekenzeichnet,** daß an den Auswuchtmassen (12, 13) Winkelcodierschalter (34, 35) vorgesehen sind, welche für die Winkelposition der zugeordneten Auswuchtmasse (12 bzw. 13) repräsentative Anzeigesignale an eine Positionsanzeigevorrichtung (36) abgeben, und daß bevorzugt die Positionsanzeigevorrichtung aus zwei Leuchtdiodenringen (36) besteht, die konzentrisch an der Stirnseite der Welle (11) angeordnet und jeweils einem der Codierschalter (34, bzw. 35) zugeordnet sind, wobei jeweils diejenige Leuchtdiode angesteuert ist, die mit der zugeordneten Auswuchtmasse (12, 13) winkelmäßig ausgerichtet ist, und wobei vorzugsweise die beiden Leuchtdiodenringe (36) in einem einzigen Ring von zweifarbig anregbaren Leuchtdioden zusammengefaßt sind.

7. Vorrichtung nach Anspruch 6, dadurch **gekennzeichnet,** daß die beiden Leuchtdiodenringe (36) in einem einzigen Ring von zweifarbig anregbaren Leuchtdioden zusammengefaßt sind.

8. Vorrichtung nach einem der vorhergehenden Ansprüche, dadurch **gekennzeichnet,** daß von der Sekundär-Induktionsspulenanordnung (19) eine Distanzanzeigevorrichtung (37) gespeist ist, welche vorzugsweise eine erste Schwelle (38), der eine erste Leuchtdiode (40) zugeordnet ist, und eine zweite Schwelle (39), der eine zweite Leuchtdiode (41) zugeordnet ist, aufweist, wobei die erste Schwelle (38) überschritten wird, wenn die Primär-Induktionsspulenanordnung (17) der Sekundär-Induktionsspulenanordnung (19) auf den Mindest-Sollabstand genähert ist, und die zweite Schwelle (39) überschritten wird, wenn die Primär-Induktionsspulenanordnung (17) der Sekundär-Induktionsspulenanordnung (19) noch weiter, und zwar so weit angenähert ist, daß mechanische Berührung zwischen der Primär-Induktionsspulenanordnung (17) und der Welle (11) befürchtet werden muß.

9. Vorrichtung nach einem der vorhergehenden Ansprüche, dadurch **gekennzeichnet,** daß ein und dieselbe Energiezufuhr- und Steuervorrichtung (16) an mehreren mit einer Sekundär-Induktionsspulenanordnung (19) ausgerüsteten Wellen (11) verwendet wird.

10. Vorrichtung nach einem der vorhergehenden Ansprüche, dadurch **gekennzeichnet,** daß bei einer exzentrischen Anordnung der Induktionsspulenanordnungen mehrere Sekundär-Induktionsspulenanordnungen (19) konzentrisch auf einem Ringbereich angeordnet sind, denen jeweils ein Kondensator (44) und eine Gleichrichterschaltung (32) zugeordnet ist, deren Ausgänge parallelgeschaltet sind und welche mit einer einzigen axial gegenüber dem Ringbereich angeordneten Primär-Induktionsspulenanordnung (17) zusammenwirken, indem sie bei der Rotation der Welle (11) nacheinander an der Primär-Induktionsspulenanordnung (17) vorbeilaufen.

## Revendications

1. Dispositif d'équilibrage pour des corps portés par un arbre tournant (11), pour des meules (48) par exemple, dispositif dans lequel, à l'intérieur ou à l'extérieur de l'arbre, sont placées excentriquement deux masses d'équilibrage (12, 13) à orientation électromagnétique, lesquelles sont amenées par deux moteurs de positionnement (14, 15) d'un dispositif statique d'alimentation en énergie et de commande (16) dans des positions d'orientation, où elles compensent un éventuel défaut d'équilibrage du corps, caractérisé en ce que le dispositif d'alimentation en énergie et de commande (16) présente, à proximité de l'arbre (11), un agencement primaire statique de bobines d'inductance (17), qui est alimenté avec une puissance haute fréquence suffisante pour l'entraînement des moteurs de positionnement (14, 15), cette puissance étant dérivée d'un oscillateur (18) réglable sur au moins quatre fréquences différentes, la première de celles-ci étant affectée à l'entraînement dans un sens de rotation du premier moteur de positionnement (14), la deuxième étant affectée à l'entraînement dans un sens de rotation du deuxième moteur de positionnement (15), les deux autres fréquences étant affectées à l'entraînement des deux moteurs (14, 15) dans le sens inverse de rotation, en ce que les deux moteurs de positionnement peuvent à la demande être entraînés isolément ou simultanément, en ce que, dans ou contre l'arbre (11), à proximité de l'agencement primaire de bobines d'inductance (17) et en couplage inductif avec lui, est fixé au minimum un agencement secondaire de bobines d'inductance (19), tandis que le signal de sortie de ce dernier est connecté d'une part à l'entrée d'alimentation en énergie (20) de l'un des moteurs de positionnement (14, 15), laquelle comporte un commutateur de commande de moteur d'alimentation en énergie (21) et d'autre part, par l'intermédiaire d'un réseau filtre de fréquence (22), à l'entrée de commande (23) du commutateur de commande des moteurs (21) et en ce que le réseau filtre de fréquence (22) délivre au commutateur de commande des moteurs (21) des signaux de commande, qui lui commandent d'entraîner les moteurs de positionnement (14, 15) en vue de l'équilibrage correspondant à la coordination fréquence-commande de rotation évoquée.

2. Dispositif selon la revendication 1, caractérisé en ce que l'oscillateur (18) est réglé sur la fréquence nécessaire à l'équilibrage, au choix, par des commutateurs à commande manuelle (24a, 24b, 24c, 24d, 24e) ou par un signal automatique de réglage, tandis qu'avec l'oscillateur (18), l'on a connecté notamment un étage de réglage (25), qui, de préférence par l'intermédiaire d'un étage indicateur de défaut d'équilibrage (26) et d'un amplificateur de mesure (27), est excité par un capteur de défaut d'équilibrage (28) et de préférence en plus également par un capteur de vitesse de rotation (29).

3. Dispositif selon l'une des revendications précédentes, caractérisé en ce que l'oscillateur (18) est connecté par l'intermédiaire d'un modulateur à impulsions (30) à un étage final de puissance (31), qui alimente l'agencement primaire de bobines d'inductance (17) et/ou en ce que l'agencement primaire de bobines d'inductance (17) constitue avec l'agencement secondaire de bobines à inductance (19) un transformateur accordé.

4. Dispositif selon l'une des revendications précédentes, caractérisé en ce que le glissement de fréquence de l'oscillateur (18) s'élève à une fraction de la fréquence fondamentale ou de la fréquence moyenne, le glissement de fréquence s'élevant de préférence à 20% de la fréquence fondamentale ou de la fréquence moyenne.

5. Dispositif selon l'une des revendications précédentes, caractérisé en ce que la fréquence fondamentale ou la fréquence moyenne se situe entre 50 et 150 kHz, et vaut notamment 100 kHz, et/ou en ce que à la sortie de l'agencement secondaire de bobines d'inductance (19) est placé un montage en redresseur (32) comportant un réservoir, lequel est relié de préférence par l'intermédiaire d'un étage de circuit mutateur (33) à l'entrée d'alimentation en énergie (20) du commutateur de commande des moteurs (21).

6. Dispositif selon l'une des revendications précédentes, caractérisé en ce que sur les masses d'équilibrage (12, 13) sont prévus des commutateurs codeurs angulaires (34, 35), qui fournissent à un dispositif de signalisation de positionnement (36) des signaux indicateurs représentatifs de la position angulaire de la masse d'équilibrage associée (12 ou 13) et en ce que de préférence le dispositif de signalisation de positionnement est constitué par deux anneaux à diodes lumineuses (36) placés concentriquement sur la face frontale de l'arbre (11) et sont associés chacun à un commutateur codeur (34 ou 35), tandis qu'à chaque fois est excitée la diode même qui est alignée en phase avec la masse d'équilibrage associée (12, 13) et que les deux anneaux à diodes lumineuses (36) sont de préférence regroupés en un seul anneau à diodes lumineuses excitables en bicolore.

7. Dispositif selon la revendication 6, caractérisé en ce que les deux anneaux à diodes lumineuses (36) sont regroupés en un seul anneau à diodes lumineuses excitables en bicolore.

8. Dispositif selon l'une des revendications précédentes, caractérisé en ce que l'agencement secondaire de bobines d'inductance (19) alimente un dispositif indicateur d'écartement (37), qui présente de préférence un premier seuil (38), auquel est associée une première diode lumineuse (40), ainsi qu'un deuxième seuil (39), auquel est associée une deuxième diode lumineuse (41), le premier seuil (38) étant franchi, lorsque l'agencement primaire de bobines d'inductance (17) est proche de l'agencement secondaire de bobines d'inductance (19) de l'écartement minimal prescrit et le deuxième seuil (39) étant franchi, lorsque l'agencement primaire de bobines d'inductance (17) est encore plus rapproché de l'agencement secondaire de bobines d'inductance (19), à savoir si près que l'on craigne un contact mécanique entre l'agencement primaire de bobines d'inductance (17) et l'arbre (11).

9. Dispositif selon l'une des revendications précédentes, caractérisé en ce qu'un même dispositif d'alimentation en énergie et de commande (16) est utilisé avec plusieurs arbres (11) équipés d'un agence- lisé avec plusieurs arbres (11) équipés d'un agencement secondaire de bobines d'inductance (19).

10. Dispositif selon l'une des revendications précédentes, caractérisé en ce que dans une disposition excentrique des agencements de bobines d'inductance, plusieurs agencements secondaires de bobines d'inductance (19) sont placés concentriquement sur une zone annulaire, à chacun d'eux sont associés un condensateur (44) et un montage en redresseur (32), leurs sorties sont montées en parallèle et ils coopèrent avec un seul agencement primaire de bobines d'inductance (17) placé axialement par rapport à la zone angulaire, tandis que, lors de la rotation de l'arbre (11), ils passent l'un après l'autre devant l'agencement primaire de bobines d'inductance (17).

**Claims**

1. Balancing apparatus for articles, for example grinding wheels (48), which are carried by a rotating shaft, wherein two electromagnetically rotatable balancing masses (12, 13) are eccentrically arranged inside or outside of the shaft and can be brought by electric positioning motors (14, 15) by a stationary energy supply and control device (16) into rotary positions where they balance any imbalance of the object, characterised in that the energy supply and control means (16) has a stationary primary induction coil arrangement (17) arranged near the shaft (11) with the induction coil arrangement being fed with a high frequency power sufficient to drive the positioning motors (14, 15), with the power being derived from an oscillator (18) adjustable to at least four different frequencies, with the first frequency being associated with the rotational drive of the first positioning motor (14) in one direction, with the second frequency being associated with the rotational drive of the second positioning motor (15) in one direction and with the two further frequencies being associated with the opposite directions of rotation of the two positioning motors (14 and 15 respectively); in that both positioning motors are optionally operated individually or simultaneously; that at least one secondary induction coil arrangement (19) is secured in or on the shaft (11) near the primary induction coil arrangement (19) and inductively coupled to the primary induction coil arrangement (17), with the output signal of the secondary induction coil arrangement being connected to the energy supply input (30) of a motor control circuit (21) which supplies the positioning motors (14, 15) with energy and being connected via a frequency evaluation circuit (22) also to the control input (23) of the motor control circuit (21); and in that the frequency evaluation circuit (22) delivers control signals to the motor control circuit (21) which cause the motor control circuit (21) to drive the positioning motors (14, 15) for the purpose of balancing in accordance with said association of frequencies and rotary drives.

2. Apparatus in accordance with claim 1, characterised in that the oscillator (18) is alternatively adjusted by hand-controlled frequency switches (24a, 24b, 24c, 24d, 24e), or by an automatic regulating signal, to the frequency required for the balancing, with a regulating stage (25), in particular being connected to the oscillator, the regulating stage being preferably controlled via an imbalance indication stage (26) and a measurement amplifier (27) from an imbalance pick-up (28), and preferably also by a speed of rotation pick-up (29).

3. Apparatus in accordance with one of the preceding claims, characterised in that the oscillator (18) is connected via a pulse modulator (30) to a power end stage (31) which feeds the primary induction coil arrangement (17) and/or in that the primary induction coil arrangement (17) and the secondary induction coil arrangement (19) form a tuned transformer.

4. Apparatus in accordance with one of the preceding claims, characterised in that the frequency range of the oscillator (18) amounts to a fraction of the basic or middle frequency, with the frequency range preferably amounting to approximately 20% of the basic or middle frequency.

5. Apparatus in accordance with one of the preceding claims, characterised in that the basic or middle frequency lies between 50 and 150 kHz, and in particular 100 Hz and/or in that a rectifier circuit (32) with store is connected to the output of the secondary induction coil arrangement (19) and is preferably connected via a frequency converter switching stage (33) with the energy supply input (20) of the motor control circuit (21).

6. Apparatus in accordance with one of the preceding claims, characterised in that angle encoding switches (34, 35) are provided on the balance masses (12, 13) which transmit indication signals representative for the angular position of the associated balance mass (12, 13 respectively) to a position display device (36); and in that the position display device preferably consists of two luminous diode rings which are arranged concentrically to the end face of the shaft (11) and are each associated with a coding switch (34, 35 respectively), whereby in each case that luminous diode is controlled which is aligned angularly with the associated balance mass (12, 13) and with the two luminous diode rings (36) preferably being combined into a single ring of luminous diodes which can be excited in two colours.

7. Apparatus in accordance with claim 6, characterised in that the two rings of luminous diodes (36) are combined into a single ring of luminous diodes which are excitable in two colours.

8. Apparatus in accordance with one of the preceding claims, characterised in that a distance display device (37) is fed by the secondary induction coil arrangement (19) and preferably has first a threshold (38) with which a first luminous diode (40) is associated, and a second threshold (39) with which a second luminous diode (41) is associated, with the first threshold (38) being exceeded when the primary induction coil arrangement (17) has come as close as possible to the minimum desired distance from the secondary induction coil arrangement (19), and with the second threshold (39) being exceeded when the primary induction coil arrangement (17) is even closer to the secondary induction coil arrangement (19) and indeed is so close that mechanical contact between the primary induction coil arrangement (17) and the shaft (11) must be feared.

9. Apparatus in accordance with one of the preceding claims, characterised in that one and the same energy supply and control device (16) is used at several shafts (11) equipped with a secondary induction coil arrangement (19).

10. Apparatus in accordance with one of the preceding claims, characterised in that with an eccentric arrangement of the induction coil arrangements several secondary induction coil arrangements are arranged concentrically on an annular region, with a capacitor (44) and a rectifier circuit (32) being in each case associated with the secondary induction coil arrangements, with the outputs of the secondary induction coil arrangements being connected in parallel and with the secondary induction coil arrangements cooperating with a single primary induction coil arrangement (17) arranged axially opposite to the ring region in that they run past the primary induction coil arrangement (17) one after the other on rotation of the shaft.

**Fig. 1**

Fig. 3

EP 0 296 593 B1

**Fig. 4**

**Fig. 2**

EP 0 296 593 B1